# EUROPEAN PATENT APPLICATION

(11) **EP 1 074 922 A2**
(43) Date of publication of application: **07.02.2001**
(21) Application number: 00116964.8
(22) Date of filing: 07.08.2000
(51) Int. Cl.: G06F 17/30

(54) **Method and apparatus for investigating revision history of patent classification symbols**

(30) Priority: 06.08.1999 JP 22392199
(71) Applicant: Patentmall Limited, Kodaira-shi, Tokyo 187-0032 (JP); Derwent Information Limited, London WC2B 5DF (GB)
(72) Inventor: Ohga, Akihiro, Kodaira-shi, Tokyo 187-0032 (JP)
(74) Representative: Grünecker, Kinkeldey, Stockmair & Schwanhäusser Anwaltssozietät

(57) **Abstract**

A method for investigating a revision history of a patent classification symbol in plural editions of patent classification lists is provided. The input symbol is searched in each of the plural editions. When the input symbol is found in any of the editions, a corresponding symbol in the neighboring edition of the classification list by using a revision concordance list showing a revision history between that edition and neighboring edition. If a corresponding symbol is found in a previous or subsequent edition, further corresponding symbol is searched in further previous or further subsequent edition. Such searching process is repeated to investigate an edition number where the input and/or corresponding symbol is created, modified and abolished. The result is represented as the revision history in a layout arrangement. In the layout, displayed are the symbol including the input and corresponding symbols arranged in the alphabet-numerical order, followed by the edition number and title of the respective symbol.

## Description

### FIELD OF THE INVENTION

The present invention relates to a method for searching a patent classification symbol used for patent search, and particularly relates to a method for investigating a revisional history of a patent classification symbol through plural editions of patent classification system and for searching a corresponding classification symbol in a different edition. The invention also relates to an apparatus directly used for implementing the foregoing method.

### BACKGROUND OF THE INVENTION

As a patent search tool, it is widely used a patent classification system such as the International Patent Classification (which is commonly referred to as the IPC) when the patent search is conducted in view of technical subject matter. With the development of technology, terminology and classification symbol for subdivisions of the classification have become outdated in some of the original classification system. Therefore, the classification system has often been revised or up-dated. The IPC is continuously revised and published a new edition every five years.

Prior to the patent search, accordingly, it is necessary to know in which edition the patent classification symbol for use has been entered, changed or deleted. The patent search should be conducted by using not only the concerned edition but also the different edition of the patent classification list, in consideration of year period during that each edition of the classification was employed for allotting classification symbols to patent documents.

In order to assist the user, the recent edition of the IPC give special indications at the end of the subgroup title. In the authentic English text of the IPC, an arabic numeral in square brackets (for example [5] or [6]) is placed at the end of an entry and indicates the edition number of the IPC where the entry was, in relation to the preceding edition, either new or changed in wording or hierarchical position. In Japanese language text of the IPC published by JIII (Japanese Institute of Invention and Innovation), an arabic numeral surrounded by an open circle is indicated for this purpose. The user can see the newest edition of the IPC and recognize whether the selected classification symbol (i.e., subgroup) is revised or not and when such revision was affected. However, it is difficult to know details of the revision affected concerning to the selected symbol. The user cannot know which classification symbol in the preceding edition is corresponding to the selected classification symbol in the current edition.

When new edition of the IPC was published, the IPC "Revision Concordance List" was also published. This concordance list merely shows the revised classification symbols (i.e., subgroup) in the new edition and the corresponding symbols in the preceding edition. It cannot be known what technical subject matter was changed or transferred.

In the case that due to the revision the scope of some subdivisions, e.g., groups has changed so that the subject matter has been transferred to new groups or subgroups, it should be checked the concordance list to know from which classification symbol of the preceding edition the concerned subject matter defined by the new classification symbol of the new edition of the IPC. And then the titles (i.e., classification definition such as words or phrase explaining the technical subject matter) both of the corresponding symbol of the preceding edition and the symbol of the new edition must be recognized by reviewing both of the preceding and new editions of the patent classification lists.

In some revision cases of the classification symbols, some or all of the subject matter defined by the previous symbol was divided by plural new symbols and transferred to new places in the new edition. Also the subject matters each defined by plural previous symbols was unified and covered by single new symbol of the new edition.

In the case, it is necessary to compare the plural patent classification lists and confirm how the classification was affected and where the corresponding previous symbols were placed. Thus confirmation procedure must be conducted using at least three texts, i.e., at least two neighboring editions of the IPC and at least one revision concordance list. This procedure is very cumbersome and the user has to make strenuous exertions.

"IPC: CLASS CD-ROM" which was published by WIPO contains the first to sixth editions of the IPC and the Revision Concordance List for each editions. The user can investigate the correspondence between the previous symbol and the current symbol, but cannot observe the titles described in the preceding edition and new edition affected by the revision, side by side.

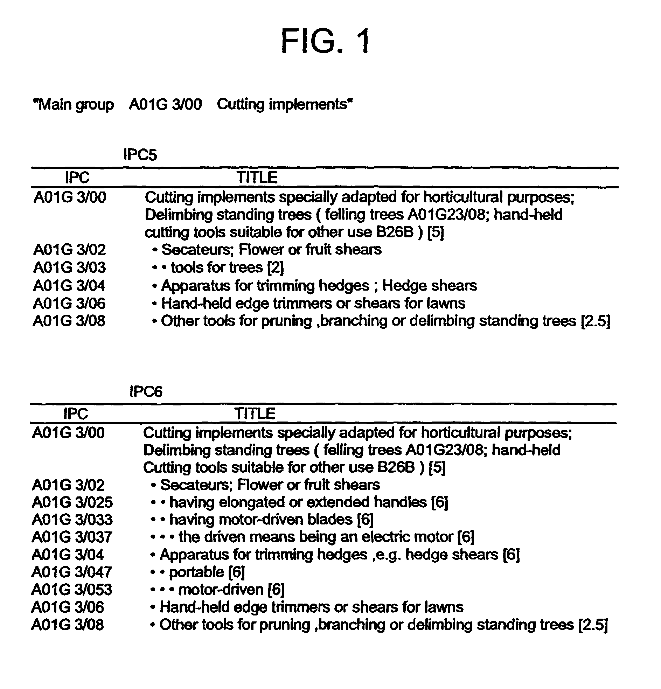

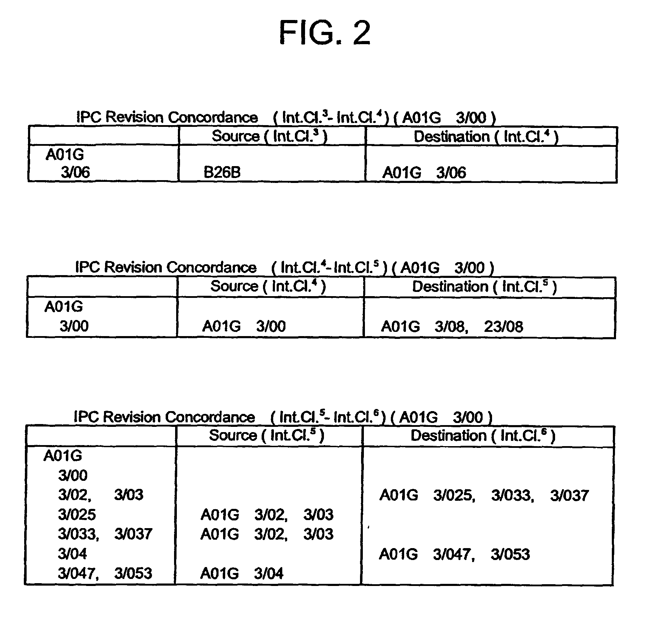

The typical example of the classification revision is now explained. Fig. 1 shows two diagrams which are extracted from the fifth and sixth editions of the IPC in respect of the main group "A01G 3/00; Cutting implements specially adapted for horticulture purposes". Fig. 2 is a diagram showing revised group symbols with respect to the main group "A01G 3/00" extracted from the IPC Revision Concordance List. As seen in these figures, the subgroups "A01G 3/02" and "A01G 3/03" were revised in the course of the revision work from the fifth edition to the sixth edition. More specifically, from another technical viewpoint, new symbols of subgroups "A01G 3/025", "A01G 3/033" and "A01G 3/037" were created as a hierarchically lower level group and introduced into the sixth edition. The symbol of subgroup "A01G 3/02" was maintained in the sixth edition, but the symbol of subgroup "A01G 3/03" was abolished and deleted from the sixth edition. In addition, the subgroup "A01G 3/04" was subdivided and new two-dots subgroup symbol "A01G 3/047" and new three-dots subgroup symbol "A01G 3/053" were introduced into the sixth edition as hierarchically inferior groups.

The above-mentioned example is one of simple revision. However, more complex and large scale revision has often been carried out. For example, the group "G06F 15/00" was repeatedly affected by many revision works in each of the fourth, fifth and sixth edition. Several group symbols were deleted and tens of new group symbols were created in series of the revision works. A great effort is required even if the user tracks the revision history of only one classification symbol. Further, there is some cases that the subject matter contained in the one group of the preceding edition was subdivided and some of subdivided matter was transferred to and covered by a certain group of the new edition, while the subject matter covered in the another group of the preceding edition was transferred to the certain group of the new edition. In such a case, it is difficult to compare and examine the concerned symbol and the corresponding symbols covering the same technical subject matter in many editions of the IPC.

Before making a patent search, in general, the user seeks the technical subject matter from the titles of the class, subclass or groups of the latest edition of the IPC and selects the classification symbol (class, subclass, group or subgroup) for the subject being sought. However, the symbols of groups which have been deleted are not indicated in the subsequent editions. Therefore, the user has to search the old editions. Furthermore, it is hard to investigate whether a classification symbol allotted to an old patent publication was revised and what symbol in the subsequent edition corresponds to the previous symbol.

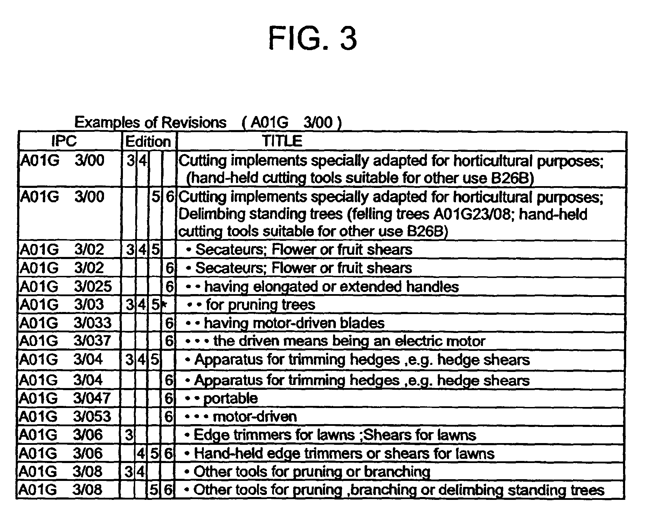

Accordingly, the inventor has sought a representation for showing revision history or passage of the classification symbol covering the technical subject matter concerned. As a revision history, it is preferable to display the edition number affected by the revision and details of the revision such as symbols which were newly created, modified or deleted in the revised edition, modification of the title and modification of terminology. Fig. 3 is one of goals of the present invention, which visually represents the edition number containing the revised symbol and its title.

### SUMMARY OF THE INVENTION

The present invention has been accomplished under the circumstances as aforementioned, and a first object thereof is to provide a method for investigating a revision history of a patent classification symbol through plural editions of patent classification system.

It is a second object of the present invention to provide a method for investigating a revision history of a classification symbol in plural editions of patent classification system and for displaying the result of the investigation as a table to be represented to the users.

A third object of the present invention is to provide an apparatus for investigating and displaying a revision history of a patent classification symbol, which is directly used for an embodiment of the above method. A fourth object of the present invention is to provide a recording medium having a control program of this apparatus recorded therein.

The first object of the present invention is achieved by the provision of a method for investigating a revision history of a patent classification symbol in plural editions of patent classification lists, comprising the steps of:
a) providing the plural editions of patent classification list and a revision concordance list showing the interrelation of the classification symbol used in the adjacent editions of the patent classification lists;
b) specifying an input symbol, which is a classification symbol to be searched;
c) searching the input symbol from one edition of the patent classification list;
d) when the input symbol is not found in the step c), recognizing that said input symbol is not defined in that edition of the patent classification list;
e) when the input symbol is found in the step c), searching a corresponding symbol which is a classification symbol defined as a source of the input symbol in a revision concordance list showing a revision history between the previous and the object editions of the patent classification lists;
f) when the corresponding symbol defined as a source is found in the step e), searching a further corresponding symbol which is a classification symbol defined as a source of said corresponding symbol obtained in the step e) in a revision concordance list showing a revision history between the previous and further previous editions of the patent classification list; this searching step being sequentially repeated until no corresponding symbol defined as a source is found in further previous edition of the patent classification list;
g) when the input symbol is found in the step c), searching a corresponding symbol which is a classification symbol defined as a designation of the input symbol in a revision concordance list showing a revision history between the object edition and next edition of the patent classification list;
h) when the corresponding symbol defined as a designation is found in said step g), searching a further corresponding symbol which is a classification symbol defined as a destination of the corresponding symbol obtained in the step g) in a revision concordance list showing a revision history between the next and the next to next editions of the patent classification list, this searching step being sequentially repeated until no more corresponding symbol defined as a destination is found in further next edition of the patent classification list;
i) repeating said step c) to h) for other edition of the patent classification list;
j) reading out the respective edition numbers of the patent classification list in which the input symbol and the corresponding symbols are found, and reading out titles of the respective symbols; and
k) displaying the respective symbols including the input symbol and obtained corresponding symbols, together with the edition number of the patent classification list containing the respective symbols and the title of the respective symbols.

The second object of the present invention is achieved by a method for investigating a revision history of a patent classification symbol in plural editions of patent classification lists; comprising the steps of;
a) searching an input symbol which is a patent classification symbol, the revisional history of which is to be investigated, in the plural editions of the patent classification lists to find a corresponding symbol in a different edition of the patent classification list, the corresponding symbol defining the same field of technical matter as that defined by the input symbol;
b) displaying the symbols including the input symbol and the obtained corresponding symbol in an alphabet-numerical order, followed by edition numbers of the patent classification list which contains the respective symbols, and followed by dots notations and titles of the respective symbols which is read from the respective edition of the patent classification list, the dots notation indicating a hierarchical position of the respective symbols in the classification system;
   wherein the input symbol is marked with a notation mark;
   wherein, when there is any change of the respective symbols between the neighboring editions of the patent classification lists, the symbol effected by such change is repeatedly indicated, one of the repeatedly indicated symbols is followed by the edition number of the preceding edition of the patent classification list to which such change does not enter, and the other of the repeatedly indicated symbols is followed by the edition number of the patent classification to which such change enters; and
   wherein, when any of the respective symbols is abolished in any edition of the patent classification list, an abolition mark is indicated at the position where the edition number of the patent classification list, in which the symbol is deleted, should be placed.

To attain the third object, according to the present invention, there is provided an apparatus for investigating and displaying a revision history of a patent classification symbol in plural editions of patent classification lists, with use of the plural editions of the patent classification lists and a revision concordance list showing the interrelation of the classification symbol used in the neighboring editions of the patent classification lists, comprising:
a) input means for inputting a classification symbol to be investigated in respect of the revision history as an input symbol;
b) classification list search means for searching the input symbol in the patent classification lists;
c) concordance list search means for searching a corresponding symbol, which is a classification symbol in a different edition of the patent classification lists, defining the same field of technical matter as that defined by the input symbol, with use of the revision concordance list, and for investigating the relationship between the input symbol and the corresponding symbol;
d) progress determining means for determining the revision history of the input symbol, the progress determining means receiving the result of said concordance list search means, and collecting the corresponding symbols, which exists in the different edition of the patent classification list, the edition number of the patent classification list containing the input symbol or the corresponding symbol and a title of the respective symbols from the respective edition of the patent classification list;
e) display means for displaying the result collected by said progress determining means; and
f) control means for controlling an operation of each means.

The fourth object of the present invention is attained by a recording medium having a program recorded therein, the program being a control program of said control means of the above apparatus.

### BRIEF DESCRIPTION OF THE DRAWINGS

Fig. 1 shows two diagrams of examples of classification list extracted from the fifth and sixth edition of the IPC, respectively;
Fig. 2 is an example of a representation diagram showing a revision history of an classification symbol concerned, which is one embodiment of representations according to the present invention;
Fig. 4 is a functional block diagram of an apparatus to which an embodiment of the present invention is applied;
Fig. 5 is a simplified diagram showing operation of the embodiment of the present invention;
Fig. 6 is a flowchart explaining operation procedure in the route A of the Fig. 5;
Fig. 7 is a flowchart explaining operation procedure in the route B of the Fig. 5;
Fig. 8 is a flowchart explaining operation procedure in the route C of the Fig. 5;
Fig. 9 is an exceptional example illustrating the presentation of the revision history of the classification symbol, the subgroup symbol A01G 3/02; and
Fig. 10 is another exceptional example illustrating the presentation of the revision history of the classification symbol, the subgroup symbol A01G 3/03.

### DESCRIPTION OF THE PREFERRED EMBODIMENTS

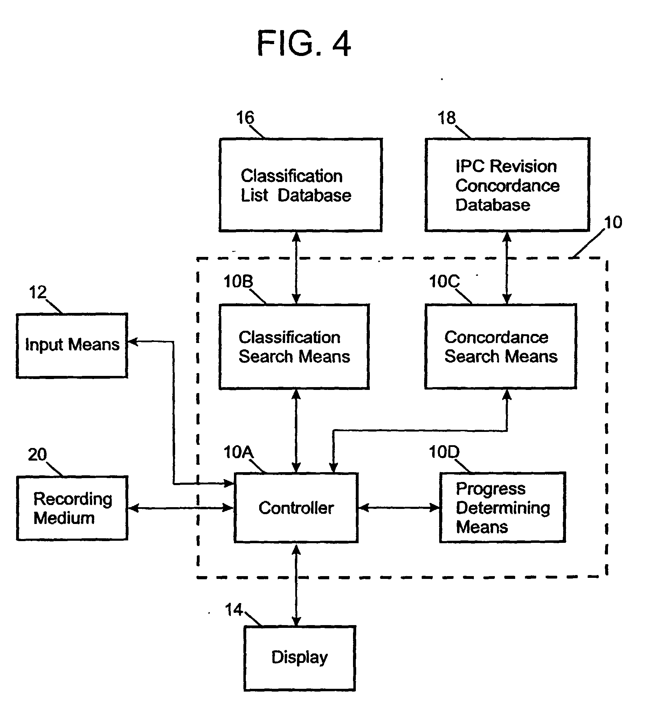

Preferred embodiment of the method and apparatus of the present invention applied for investigating a revision history of the symbol of the IPC classification system will be described with reference to Figs. 4 to 10.

Fig. 4 shows a functional block diagram of an embodiment of the apparatus according to the present invention. The apparatus comprises of a computer 10 such as CPU or other processing means, input means 12 and display means 14. The computer 10 comprises of control means 10A, classification list search means 10B, concordance list search means 10C and progress determining means 10D, and is connected to a classification list database 16 and a IPC revision concordance list database 18 via respective transmission paths. The databases 16, 18 may be constituted by storage means such as a hard disk drive unit or other external storage device, respectively. 20 is a recording medium such as CD-ROM and stores a computer program for controlling the computer 10. The computer 10 is subjected under the program recorded in the recording medium 20 and performs various kind of operations in the control means 10A, the classification search means 10B, the concordance list search means 10C and the progress determining means 10D.

The input means 12 may be a keyboard or a combination of the keyboard and a pointing device such as a mouse. Through the input means, the user input a classification symbol to be investigated and an edition number of the IPC. If required, a catchword or keyword may be input for selecting a classification symbol. The input means 12 is also used for selecting, deleting or specifying some of the classification symbols displayed as a symbol list or table on the display means 12. Also a paging operation of the displayed symbol list and a selection of the program to be used may be changed by specifying through the input means 12.

The display means 14 is a display device such as CDT, a liquid crystal panel or a plasma display. The result of search, i.e., a revision history of the input classification symbol is displayed on the display means 14 together with other information.

The database 16 stores, for example, the third, fourth, fifth and sixth edition of the IPC, and stores all of the patent classification symbols (also referred to as "IPC" or "IPC symbol" hereinafter), their dots notation showing their hierarchical level of the classification and their title (or classification definition describing their technical subject matter) contained in each edition. The data stored in the database 16 may be image data if the result of the investigation can be displayed or printed as an image containing the input and corresponding IPC symbols and their title. Preferably, the data stored in the database 16 is text data which can be utilized for a character search such as a catchword search. IPC index file may be prepared and stored in the database 16, to give a convenient tool for high-speed search of IPC symbol.

The classification search means 10B accesses the database 16 to search the IPC symbol specified by the controller 10A, read the IPC and its title from the corresponding edition and output them to the progress determining means 10D through the controller 10A. When the read title is preceded by dots notation, the controller 10A or the classification search means 10B may judge the hierarchical position of the specified IPC symbol and/or corresponding IPC symbol, and search the higher classification symbols such as the subgroup having less dot notation and the main group. These IPC symbols having hierarchically higher position and their title are also read out an output. The classification list search means 10B conduct the above-mentioned search for every edition of the patent classification list (the IPC), in the order instructed by the controller 10A according to the control program.

The database 18 stores the IPC Revision Concordance Lists; "the third edition vs the fourth edition", the fourth edition vs the fifth edition" and "the fifth edition vs the sixth edition". In each concordance list stored in the database 18, the IPC symbols in the preceding edition which were affected by the revision and the IPC symbols in the new edition both covering the same technical subject matter are contrasted. Namely, when any revision effected the IPC symbols in the preceding edition and new IPC symbol(s) is entered in the new edition, the preceding IPC symbol is indicated as a "source" on the preceding edition side and the new IPC symbol is indicated as "destination" or "entry" on the new edition side. The correspondence between these source and destination is stored in the database 18.

The concordance list search means 10C searches the IPC symbol specified by the controller 10A according to the control program for either or both of the preceding edition or the new edition. When the IPC symbol is found in any of older and newer editions, the corresponding IPC symbol(s) existing in the opposing edition is read and output.

When a IPC symbol to be investigated is input through the input means 12, the controller 10A instructs the classification search means 10B to search the input IPC symbol in the selected edition of the classification list stored in the database 16. When the input IPC symbol is found in the selected edition, the classification list search means 10B reads the edition number and the IPC symbol with or without its title, and outputs them to the progress determining means 10D. Upon receipt of the result that the input IPC symbol exists in the selected edition, the controller 10A specifies the Revision Concordance List containing the selected edition in which the obtained input IPC symbol should be indicated as a source or destination, if any. And the controller 10A instructs the concordance list search means 10C to search the IPC symbol in the specified Revision Concordance List. If found, the corresponding IPC symbol, the edition number containing that symbol and the edition number containing the input IPC symbol are read. In accordance with the information the existence of the corresponding IPC symbol in the neighboring edition, the controller 10A sends a further instruction to the classification lost search means 10B to search the corresponding IPC symbol in the neighboring edition and obtain the edition number containing the corresponding symbol and its title. Also the controller 10A transmits a n instruction to the concordance list search means 19C to search the corresponding IPC symbol in the previous or next Revision Concordance List to investigate whether further corresponding IPC symbol(s) exists. If the further corresponding IPC symbol is found, that symbol and other information are read. These operations are repeatedly conducted by the instructions of the controller 10A. The operational order of the searches conducted by the search means 10B, 10C may be varied according to the control program.

The progress determining means 10D receives the search results from the search means 10b, 10c, processes various operation to determine a progress or revision history of the input IPC symbol in the plural continuing editions. Specifically, the progress determining means 10D temporarily stores plural search results obtained from different search route, synthesizes the plural search results, processes the search result differentially, instructs to the search means 10B to read the titles, stores the search routes if necessary. And the progress determining means 10D performs necessary processes for displaying the list of the IPC symbols, edition number(s), their titles and other information on a predetermined format. The search result arranged in the layout format is output to the display means 14 to display the search result in the layout format showing a revision history of the concerned IPC symbol. In addition, according to an instruction through the input means 12 or the controller 10A, a part of the search result may be selected to be displayed or deleted from the display of the format. Also some of the search result may be selected from the displayed layout format to be duplicated as text data. The search result may be output to a printer or other external device which is not shown.

In this embodiment, the description is made in the case where three editions of the IPC (i.e., the fourth, fifth and sixth editions) and two IPC Revision Concordance List; "the fourth edition vs the fifth edition" and "the fifth edition vs the sixth edition") are used. However, it is easy to understand that the present investigating method can be performed similar procedures when two edition or four or more editions of the IPC are used.

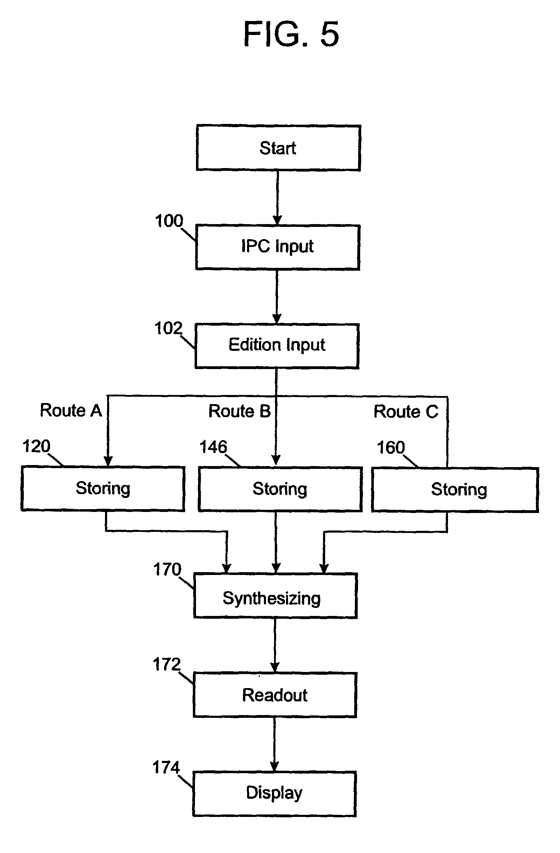

An explanatory process for display a progress or revision history of the input IPC symbol through three editions of the IPC will be described hereinafter, with reference to a flowchart of Fig. 5.

When the preceding edition side of the Revision Concordance List (RCL) is searched to find the input IPC or IPC symbol specified by the controller 10A, and if the input or specified IPC symbol is found in the preceding edition side while a corresponding IPC symbol(s) is placed in the new (or revised) edition side, the corresponding IPC symbol is simply referred to as "destination IPC", herein after. When the input or specified IPC symbol is found in the new or specified edition side of the Revision Concordance List while a corresponding IPC symbol is placed in the preceding edition side, the corresponding IPC symbol in the preceding edition side in merely referred to as a "source IPC", hereinafter.

Fig. 5 shows an entire flowchart of the operational processes branching three routes A, B and C. The search results of the respective routes are combined or synthesized to obtain a progress or revision history of the concerned IPC symbol in the three editions. These routes A, B and C are different with each other from which edition the search of the input IPC is started. Namely, the input IPC is searched in the different editions by the respective routes. In the route A, for example, it is searched whether the input IPC symbol exists in the fourth edition of the IPC classification list. And if the input IPC symbol exists, it will be searched whether the input IPC was revised by the fifth or sixth edition using the Revision Concordance List. If the input IPC was revised, a corresponding or destination IPC will be searched. If the destination IPC was revised again, a destination IPC of the destination IPC (which is referred to as "re-destination IPC", hereinafter) will be searched. The search results obtained by the respective routes are chosen or synthesized to obtain the IPC symbols including the input IPC and the corresponding IPC (source and/or destination IPC). The edition number containing the respective IPC symbol are read and displayed in the list order of the IPC.

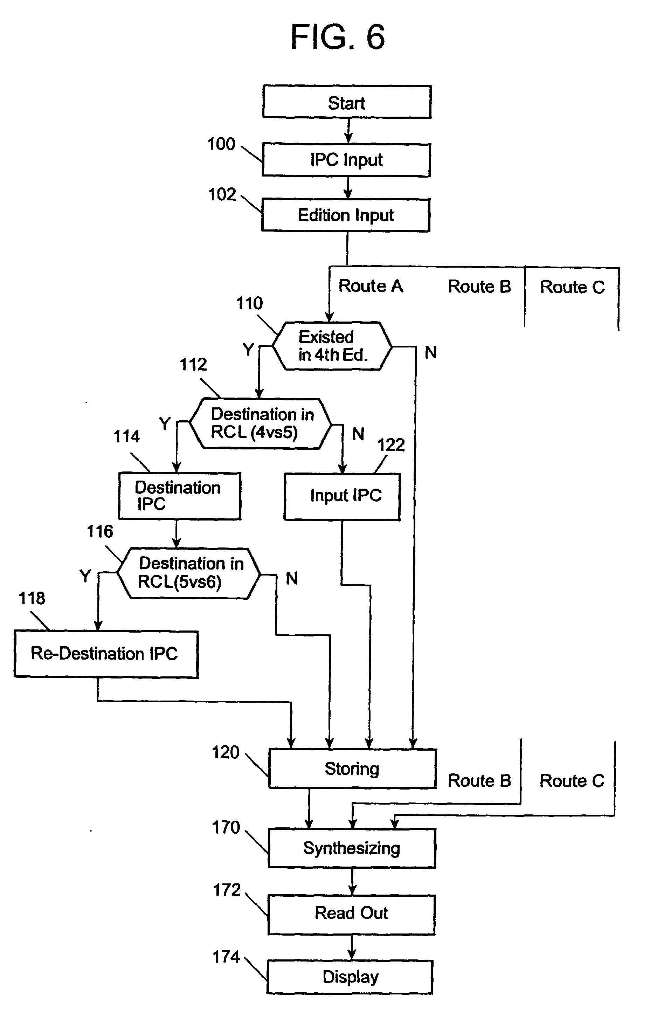

After an IPC symbol covering the technical subject matter is selected from a arbitrary edition of the IPC, the operator inputs the selected IPC symbol as the input IPC via the keyboard 12 and designates the edition numbers 4, 5 or 6 of the IPC (steps 100, 102). When not designating the edition number used for selection of the IPC symbol, all editions of the IPC and all concordance lists are chosen automatically. Operation process in the route A will be explained, at first, referring to Fig. 6.

In the route A, the input IPC symbol is searched in the fourth edition of the IPC (step 110). If the input IPC exists in the fourth edition of the IPC, it is investigated whether the input IPC exists in the fourth edition side of the Revision Concordance List; the fourth edition vs the fifth edition (step 112). The Revision Concordance List is referred to as "RCL" in Fig. 6. If the input IPC is found in the fourth edition side, a corresponding IPC symbol, i.e., a destination IPC is read from the fifth edition side (step 114). Next, it is investigated whether the obtained destination IPC of the fifth edition exists in the fifth edition side of the Revision Concordance List; the fifth edition vs the sixth edition (step 116). If the destination IPC is found in the fifth edition side, a further corresponding IPC symbol, i.e., a re-destination IPC is read from the sixth edition side (step 118). When two or more destination IPC are found in the fifth edition at the step 114, the steps 116 and 118 are carried out for every destination IPC, respectively. As a result of the aforementioned search process, the input IPC of the fourth edition, the destination IPC of the fifth edition and the re-destination IPC of the sixth edition are temporarily stored in the progress determining means 10D or other storing means (step 120). In other words, stored is the temporary search that the input IPC exists in the forth edition of the IPC, the destination IPC exists in the fifth edition an the re-destination IPC exist in the sixth edition. When any destination IPC is not found in the fifth edition side at the step 116, this shows that the destination IPC was not revised by the sixth edition of the IPC and maintained in the sixth edition as it is. In that case, stored is a temporary search result that the input IPC exists in the fourth edition and the destination IPC exists in both fifth and sixth editions (step 120).

The absence of the input IPC in the fourth edition side at the step 112 shows that the input IPC was not revised by the fifth edition and maintained in the fifth edition of the IPC. A process for investigating wether the input IPC was revised in the sixth edition of the IPC is not performed, because such investigation process will be performed by the process of the route B, as described later. Therefore, a subsequent search is not performed and the input IPC of the fourth edition is output (step 122). The search result such that the input IPC exists in the fourth edition is temporarily stored, as a result of the route A (step 120).

When the input IPC is not found in the fourth edition of the IPC at the step 110, it is recognized that the input IPC had not been defined in the fourth edition as yet. In this case, the search result that the input IPC does not exists in the fourth edition of the IPC is temporarily stored (step 120). In summary, any one of the above-described results is temporarily stored as the search result of the route A at the step 120.

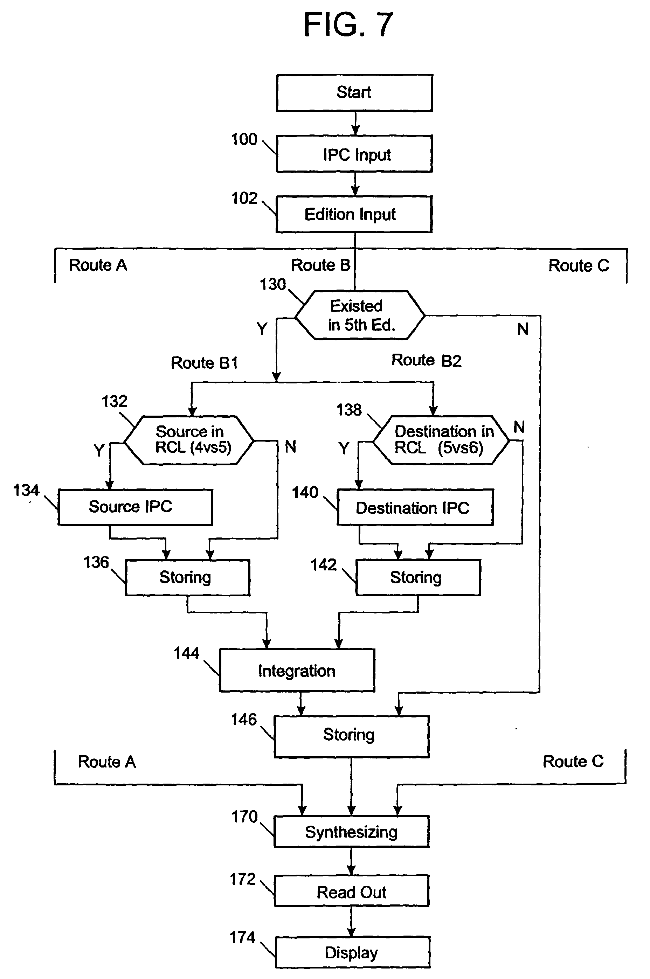

Next, the route B will be explained with reference to Fig. 7. Th input IPC is searched in the fifth edition of the IPC (step 130). If the input IPC exists in the fifth edition, the route B is branched into a sub-route B1 which investigates a destination IPC and a sub-route B2 which investigates a destination IPC.

In the sub-route B1, it is investigated whether the input IPC exists in the fifth edition side of the IPC Revision Concordance List; the fourth edition vs the fifth edition (step 132). If the input IPC is found in the fifth edition side, a corresponding IPC, i.e., a source IPC is read from the fourth edition side (step 134). And stored is the temporary search result that the input IPC exists in the fifth edition and the source IPC exists in the four the edition (step 136). When the input IPC is not found in the fifth edition side at the step 132, it can be recognized that the input IPC of the fourth edition was not revised by the fifth edition and maintained in the fifth edition as it is. Accordingly, the search result that the input IPC exists in both fourth and fifth edition is temporarily stored (step 136).

In the sub-route B2, it is investigated whether the input IPC exists in the fifth edition side of the Revision Concordance List (RCL); the fifth edition vs the sixth edition (Step 138). If the input IPC is found in the fifth edition side, the corresponding IPC symbol, i.e., a destination IPC is read from the sixth edition side (step 140). Stored is the temporary search result that the input IPC exists in the fifth edition and the destination IPC exists in the sixth edition (step 142). when the input IPC cannot be found in the fifth edition side of the RCL, it is recognized that the input IPC of the fifth edition was not revised by the sixth edition and maintained in the sixth edition as it is. At the step 142, accordingly, the search result that the input IPC exists in both fifth and sixth edition is temporarily stored.

The temporary search result of the sub-route B1 obtained at the step 136 and the temporary search result of the sub-route B2 obtained at the step 142 are synthesized or combined. Since the respective routes has one of two kind of results, the combination of the results of the two sub-routes B1, B2 is one of four kind of combinations. Such combination includes a combination of the results output by the step 134 and the step 140; a combination of the results output by the step 134 and the step 138; a combination of the results output by the step 132 and the step 140; and a combination of the results output by the step 132 and the step 138. Combined and integrated search result should be any one of the following search results:
1) the source IPC exists in the fourth edition, the input IPC exists in the fifth edition and the destination IPC exists in the sixth edition;
2) the source IPC exists in the fourth edition and the input IPC exists in both the fifth and sixth editions;
3) the input IPC exists in both the fourth and fifth editions and the destination IPC exists in the sixth edition; and
4) the input IPC exists in all of the fourth, fifth and sixth editions.

One of the above four kinds of the result is temporarily stored at the step 146.

When the input IPC is not found in the fifth edition at the step 130, stored at the step 146 is a temporary search result that the input IPC does not exists in the fifth edition. Consequently, the search result obtained by route B is one of the above five kinds of the result, and this search result is actually stored at the step 146 in the progress determining means 100 or other storing means.

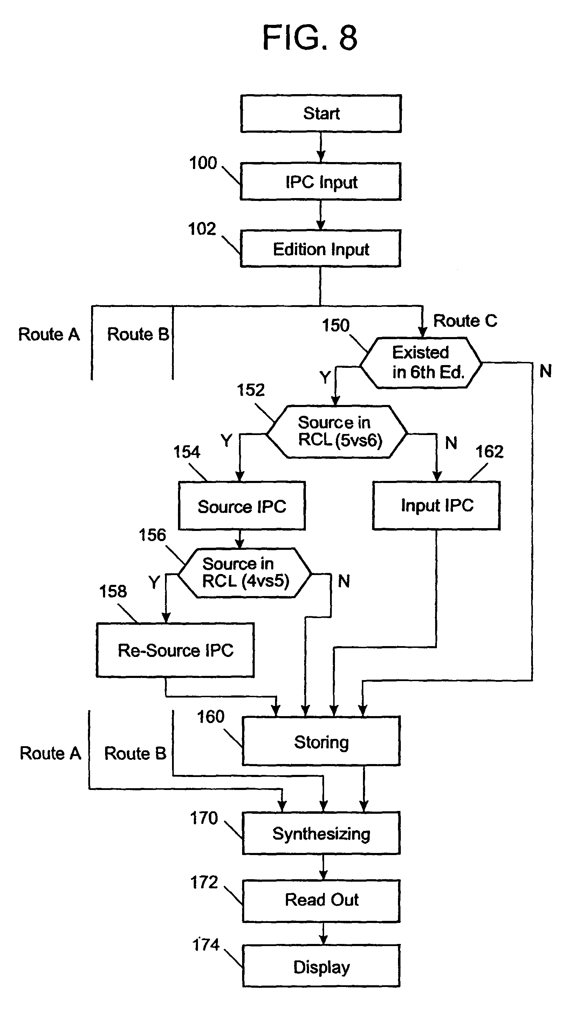

The route C will be explained with reference to Fig. 8. The input IPC symbol is searched in the sixth edition of the IPC (step 150). If the input IPC exists in the sixth edition of the IPC, it is investigated whether the input IPC exists in the sixth edition side of the Revision Concordance List; the fifth edition vs the sixth edition (step 152). If the input IPC is found in the sixth edition side, a corresponding IPC symbol, i.e., a source IPC is read from the fifth edition side (step 154). Next, it is investigated whether the obtained source IPC of the fifth edition exists in the fifth edition side of the Revision Concordance List; the fourth edition vs the fifth edition (step 156). If the source IPC is found in the fifth edition side, a further corresponding IPC symbol, i.e., a re-source IPC is read from the fourth edition side (step 158). When two or more source IPC are found in the fifth edition at the step 154, the steps 156 and 158 are carried out for every destination IPC, respectively. As a result of the aforementioned search process, temporarily stored is that the input IPC exists in the sixth edition, the source IPC exists in the fifth edition and the re-source IPC exists in the fourth edition. When any source IPC is not found in the fifth edition side at the step 156, this shows that the source IPC of the fifth edition was not revised by the fifth edition of the IPC and the source IPC already existed in the fourth edition. In that case, stored is a temporary search result that the input IPC exists in the sixth edition and the source IPC exists in both fourth and fifth editions (step 160).

The absence of the input IPC in the sixth edition side at the step 152 shows that the input IPC was not revised by the sixth edition and the input IPC already existed in the fifth edition of the IPC. A process for investigating wether the input IPC was revised in the fifth edition of the IPC is not performed, because such investigation process is performed by the process of the route B, as described the above. Therefore, a subsequent search is not performed and the input IPC of the sixth edition is output (step 162). The search result such that the input IPC exists in the sixth edition is temporarily stored, as a result of the route (step 160).

When the input IPC is not found in the sixth edition of the IPC at the step 150, it is recognized that the input IPC is not defined in the sixth edition, that is, the input IPC was abolished and deleted from the sixth edition. In this case, the search result that the input IPC does not exists in the sixth edition of the IPC is temporarily stored (step 160). In summary, any one of the above-described results is temporarily stored as the search result of the route C at the step 160.

As described the above, the route A outputs one of four kinds of possible search results, the route B outputs one of five kinds of possible search results and the route C outputs one of the four kind of possible search results. The search results obtained by the respective routes and temporarily stored at the respective step 120, 146 and 160. are combined or synthesized (step 170 in Fig. 5). In this process, aan overlapped search result is deleted. From the synthesized search result, all of the IPC symbols including the input IPC and the corresponding (i.e., source, re-source, destination and/or re-destination IPC) and the edition numbers of the IPC containing the respective IPC symbol are obtained. The titles of the respective IPC symbols is read from the edition of the IPC containing the respective IPC symbols (step 172). The progress determining means 10D receives and collects these data and arranges to display the IPC symbols with its edition number and title in the predetermined format of a list or table (step 174).

Various processes for determining and representing the revision history of the input IPC may be employed. One of examples is that the search results obtained by the routes A, B and C are separately arranged and displayed. However, the revision history cannot be shown in this method. Preferably, the results of the routes A, B and C are synthesized and displayed in one list of table for user's convenience. In this case, all of the IPC symbols including the input IPC and the obtained corresponding IPC symbols are arranged in an alphabet-numerical order, which is the same order used in the IPC. And the respective IPC symbols in the table followed by the edition number of the IPC containing the respective IPC symbols. If any of IPC symbols are affected by revision, such symbol is repeatedly arranged in the order of the edition number.

An example of the investigating process is explained using the IPC symbol seen in Fig. 3. When the subgroup symbol "A01G 3/02" is selected, the symbol "A01G 3/02" is input in the step 100 of Fig. 5 and the edition numbers 4, 5 and 5" are designated in the step 102 of Fig. 5. In the route A of Fig. 6, only the input IPC of the fourth edition is found by the step 112 and output at the step 122 as the result that the input IPC exists in the fourth edition, which is then stored temporarily (step 120). In the route B, the input IPC of the fourth and fifth edition are obtained by the step 132 of Fig. 7 to be output and stored at the step 136. The input IPC of the fifth edition and the destination IPC of the sixth edition are obtained by the step 140 to be output and stored at the step 142. These temporary search results stored at the step 136, 142 are synthesized (step 144). The synthesized data showing that the input IPC exists in both the fourth and fifth editions ans the destination IPC exists in the sixth edition is temporarily stored (step 146). In the route C, the input IPC of the sixth edition is obtained by the step 162 of Fig. 8 to be stored at the step 160. The search results obtained by the routes A, B and C are synthesized at the step 170. The synthesized search result shows that the input IPC, subgroup A01G 3/02 exists in all of the fourth, fifth and sixth edition and is revised by the revision from the fifth edition to the sixth edition.

As a result, the revision history is that the input IPC Ao1G 3/02 existing in the fourth edition is maintained in but revised by the sixth edition, and that the destination IPCs A01G 3/02, A01G 3/033 and A01G 3/037 were entered in the sixth edition. The titles of the respective IPC symbols is read from the respective editions of the IPC.

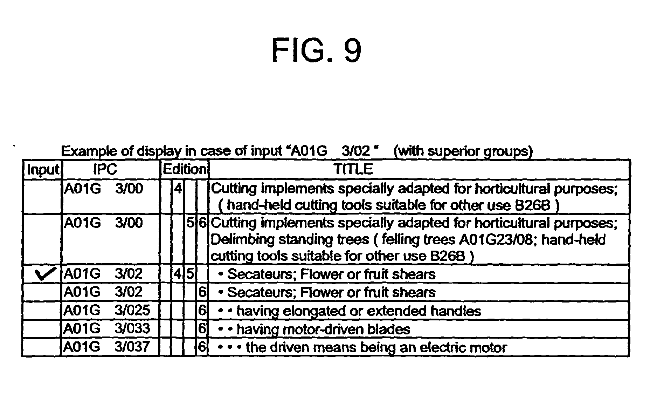

In the mealtimes, the main group symbol A01G 3/00 which has a hierarchically higher position is revised in the fourth and fifth editions, as shown in Fig. 2. If each route is tracked, by the route A, the input IPC is found in the fourth edition and the destination IPC is found in the fifth and sixth editions. In the route B, the input IPC is found in the fourth, fifth and sixth editions. In the route C, the input IPC is found only in the sixth edition. According to the major object of the present invention, there is no need for searching the destination IPC of the hierarchically higher group. However, if the title of such higher group has been changed by any editions, such change effects the technical matter defined in the subgroup symbol, and therefore displayed in this embodiment. An example of such a representation of the result is shown in Fig. 9. In this figure, the check mark " 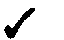 " indicates the input IPC having the designated edition number.

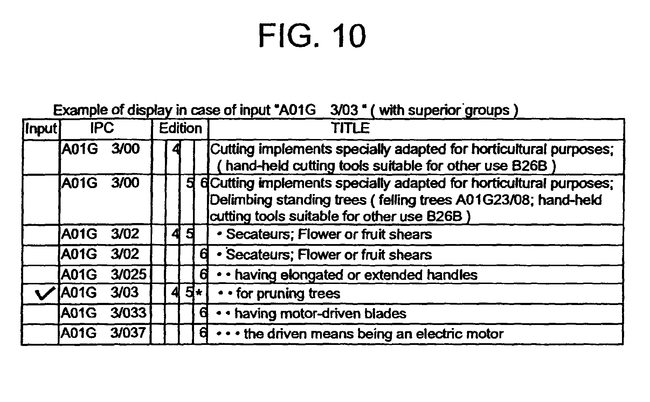

In the case of the subgroup symbol A01G 3/03, the route A output the input IPC of the fourth edition, and the route B output the input IPCs of the fourth and fifth edition and the destination IPCs (subgroup A01G 3/02, A01G 3/033 and A01G 3/037) of the sixth edition. The route C output no IPC symbol in any editions. This shows the fact that the input IPC exists in both the fourth and fifth edition, but is abolished and deleted from the sixth edition. As a result, the IPC symbols to be listed in the revision history are the input IPC existing in both the fourth and fifth editions and the destination IPC symbols A01G 3/025, A01G 3/033 and A01G 3/037 all in the sixth edition. The title of the respective IPC symbols is read from the respective editions of the IPC. The result is shown in Fig. 10. In Fig. 10, the mark "*" positioned in the column of the edition number indicates the edition number is which the IPC symbol is abolished and deleted from the edition.

As seen from Figs 9 and 10, it can be understood how titles of the respective IPC symbols has been modified or how the technical matte covered by the concerned IPC symbol is affected by the introduction of the hierarchically lower subgroups. In the case of Fig. 9, the title of the subgroup A01G 3/02 in the fifth edition has not been modified by the revision work of the sixth edition. However, the range of the technical matter solely covered by the subgroup A01G 3/02 becomes smaller by the entry of three new subgroups having hierarchically lower position. Moreover, in the case of Fig. 10, it is understood that the subgroup symbol A01G 3/03 was abolished in the sixth edition and the subject matter covered by the preceding symbol are shared by three new subgroups created in lower position of another subgroup A01G 3/02.

The above description is made for the case that three IPC classification lists are used. However, similar operations can be conducted to investigate a revision history of the concerned IPC symbol, even when four or more editions of the IPC are used. Namely, in covering four editions of the IPC, a route D is added further, and the corresponding IPC symbol is searched for each of four editions using the routes A to D. The search results obtained by each route are synthesized and the title of the respective symbols are read from the respective edition to be displayed. To investigate a revision history during five editions of the IPC, a further additional route E is used. When many IPC symbols are found and listed on the display, the correspondence between the IPC symbols might become unclear. In the case, the search result is selected to be displayed in one display screen for user's convenient.

In a case that the concerned IPC symbol was affected by large-scale revision and all of the results cannot de displayed on a display screen, two or three editions are designated before displaying the results. When the hierarchically higher symbol such as main group is found as the corresponding symbol, it might be desired to know the lower-level symbols depending to the found main group. In this case, the classification search means 10B or the progress determining means 10D may have an additional function to display such lower level symbols together with their titles. Preferably, the progress determining means 10D can collect and display the search result containing such lower level symbols, too.

As above described, according to the invention, the revision history of the selected classification symbol in plural editions of the patent classification list can be displayed by specifying that symbol as an input symbol. The user can immediately confirm whether the classification symbol to be used for patent search covers the technical matter during the search period of years. The revision history of the concerned classification symbol can be visually observed as a table layout. Accordingly, it can be understood easily the edition number where the concerned symbol or corresponding symbol was created, revised or abolished to be deleted. The user can select the IPC symbol for uses in each edition of the IPC classification list by easy operation. When the main group symbol having hierarchically higher position is displayed together with its title, even if the title of the concerned IPC symbol is less descriptive, the technical matter covered by the concerned IPC symbol can be recognized more in detail.

The effective date of the edition may be represented to display, in stead of the edition number or together with the edition number, in the table layout of the revision history. By reviewing the effective date and referring in which edition the IPC symbol is created, modified or deleted, the user can easily decide the period to be searched using the selected IPC symbol. The IPC symbol displayed in the table layout may be specified to be duplicated as text data so that search formula containing the IPC symbol is easily prepared.

## Claims

1. A method for investigating a revision history of a patent classification symbol in plural editions of patent classification lists, comprising the steps of:
a) providing the plural editions of patent classification list and a revision concordance list showing the interrelation of the classification symbol used in the adjacent editions of the patent classification lists;
b) specifying an input symbol, which is a classification symbol to be searched;
c) searching the input symbol from one edition of the patent classification list;
d) when the input symbol is not found in the step c), recognizing that said input symbol is not defined in that edition of the patent classification list;
e) when the input symbol is found in the step c), searching a corresponding symbol which is a classification symbol defined as a source of the input symbol in a revision concordance list showing a revision history between the previous and the object editions of the patent classification lists;
f) when the corresponding symbol defined as a source is found in the step e), searching a further corresponding symbol which is a classification symbol defined as a source of said corresponding symbol obtained in the step e) in a revision concordance list showing a revision history between the previous and further previous editions of the patent classification list; this searching step being sequentially repeated until no corresponding symbol defined as a source is found in further previous edition of the patent classification list;
g) when the input symbol is found in the step c), searching a corresponding symbol which is a classification symbol defined as a designation of the input symbol in a revision concordance list showing a revision history between the object edition and next edition of the patent classification list;
h) when the corresponding symbol defined as a designation is found in said step g), searching a further corresponding symbol which is a classification symbol defined as a destination of the corresponding symbol obtained in the step g) in a revision concordance list showing a revision history between the next and the next to next editions of the patent classification list, this searching step being sequentially repeated until no more corresponding symbol defined as a destination is found in further next edition of the patent classification list;
i) repeating said step c) to h) for other edition of the patent classification list;
j) reading out the respective edition numbers of the patent classification list in which the input symbol and the corresponding symbols are found, and reading out titles of the respective symbols; and
k) displaying the respective symbols including the input symbol and obtained corresponding symbols, together with the edition number of the patent classification list containing the respective symbols and the title of the respective symbols.

2. A method for investigating a revision history of a patent classification symbol in plural editions of patent classification lists; comprising the steps of;
a) searching an input symbol which is a patent classification symbol, the revisional history of which is to be investigated, in the plural editions of the patent classification lists to find a corresponding symbol in a different edition of the patent classification list, the corresponding symbol defining the same field of technical matter as that defined by the input symbol;
b) displaying the symbols including the input symbol and the obtained corresponding symbol in an alphabet-numerical order, followed by edition numbers of the patent classification list which contains the respective symbols, and followed by dots notations and titles of the respective symbols which is read from the respective edition of the patent classification list, the dots notation indicating a hierarchical position of the respective symbols in the classification system;
wherein the input symbol is marked with a notation mark;
wherein, when there is any change of the respective symbols between the neighboring editions of the patent classification lists, the symbol effected by such change is repeatedly indicated, one of the repeatedly indicated symbols is followed by the edition number of the preceding edition of the patent classification list to which such change does not enter, and the other of the repeatedly indicated symbols is followed by the edition number of the patent classification to which such change enters; and
wherein, when any of the respective symbols is abolished in any edition of the patent classification list, an abolition mark is indicated at the position where the edition number of the patent classification list, in which the symbol is deleted, should be placed.

3. An apparatus for investigating and displaying a revision history of a patent classification symbol in plural editions of patent classification lists, with use of the plural editions of the patent classification lists and a revision concordance list showing the interrelation of the classification symbol used in the neighboring editions of the patent classification lists, comprising:
a) input means for inputting a classification symbol to be investigated in respect of the revision history as an input symbol;
b) classification list search means for searching the input symbol in the patent classification lists;
c) concordance list search means for searching a corresponding symbol, which is a classification symbol in a different edition of the patent classification lists, defining the same field of technical matter as that defined by the input symbol, with use of the revision concordance list, and for investigating the relationship between the input symbol and the corresponding symbol;
d) progress determining means for determining the revision history of the input symbol, the progress determining means receiving the result of said concordance list search means, and collecting the corresponding symbols, which exists in the different edition of the patent classification list, the edition number of the patent classification list containing the input symbol or the corresponding symbol and a title of the respective symbols from the respective edition of the patent classification list;
e) display means for displaying the result collected by said progress determining means; and
f) control means for controlling an operation of each means.

4. A recording medium having a program recorded therein, the program being a control program of said control means of the apparatus of claim 3.
